# EUROPÄISCHE PATENTANMELDUNG

(11) **EP 1 314 956 A1**
(43) Veröffentlichungstag der Anmeldung: **28.05.2003**
(21) Anmeldenummer: 02405976.8
(22) Anmeldetag: 13.11.2002
(51) Int. Cl.: G01B 11/24, G01B 11/30, G01B 21/20, G01B 21/30, G01C 7/06

(54) **Verfahren zur Untersuchung der Welligkeit einer aufgenommenen Oberfläche mit einer virtuellen Kugel**

(30) Priorität: 16.11.2001 CH 21122001
(71) Anmelder: Bodenmann, Martin, 3900 Brig-Glis (CH)
(72) Erfinder: Bodenmann, Martin, 3900 Brig-Glis (CH)

(57) **Zusammenfassung**

Die elektronische Untersuchung von grossflächigen Oberflächen wird durch neue Aufnahmemethoden immer interessanter.

Für die Untersuchung der Oberflächenbeschaffenheit zur Vorbereitung der Verlegung Isolationsbahnen usw. auf diese Fläche, ist die Untersuchung nach Vertiefungen und Erhebungen notwendig, die die Biegsamkeit dieser aufzubringenden Bahnen überfordert.

Die verschiedenen bekannten Programme untersuchen Mikrooberflächen nach andern Kriterien.

Die Kugelmethode ist ein neues Verfahren, indem man eine virtuelle Kugel (5) über eine digital aufgenommene Oberfläche (1) streichen lässt und untersucht, welche Punkte durch die Kugel nicht überstrichen werden. Dies sind die Punkte an den z.B. eine Isolationsbahn nicht aufliegt.

Durch die beidseitige Untersuchung der Oberfläche werden mit der gleichen Methode auch die unzulässigen Erhebungen detektiert.

## Beschreibung

### 1. Einleitung

Es gilt immer wieder längliche Räume (Tunnels, Rohre) auf ihr Volumen zu kontrollieren und deren Oberfläche zu beurteilen.

Es gibt verschiedenste Systeme, die die Oberfläche aufnehmen, denen aber der absolute Bezug fehlt. Drei Beispiele:
- Kanalfernsehen
- Wasserstollenuntersuchungen
- Profilkontrolle Eisenbahntunnel (Punkt nur in Bezug auf die Schiene untersucht)

Das neue System vermag folgende Aufgabenstellungen zu lösen:
- Genaue Prüfung der Oberfläche mit absoluter Positionierung
- Auswertung der Prüfung vor Ort mit Anzeichnen der Abweichungen
- Photoaufnahme mit automatischer Erstellung eines 3D Fotomodells bzw. eines Orthophotos der in die Sollebene abgelegten Oberfläche.

### 2. Stand der Technik

Im Bereich der Tunnelvermessung existieren gemäss meinen Recherchen, die im Rahmen der Ausschreibung BLS AlpTransit weltweit vertieft wurden, drei Systeme. Bei allen drei Systemen wird die Position des Aufnahmegerätes genau bestimmt.

### 2.1. Grossflächige Oberflächenaufnahmen

### 2.1.1. Photogrammetrische Aufnahme (System Dibit)

Das Aufnahmegerät nimmt zwei Bilder auf, die photogrammetrisch ausgewertet werden. Das System hat sich bewährt.

Die Auswertung erfolgt ausserhalb des Tunnels im Büro (fast automatisch, aber stundenlang).

### 2.1.2. Laseraufnahme eines Abschnittes (System Cyrax)

Das Laseraufnahmegerät nimmt vor dem Gerät einen ganzen Abschnitt mit grosser Auflösung auf.

Die Auswertung erfolgt ebenfalls ausserhalb des Tunnels.

### 2.1.3. Laseraufnahme Profil (System LKO)

Das Aufnahmegerät ist auf einem Trägerfahrzeug montiert, das sich ungefähr in der Achse bewegt, montiert. Das Fahrzeug muss vor jeder Messung anhalten, da wegen des meist unebenen Untergrundes die Aufnahme im Stillstand erfolgen muss.

Die Aufnahme erfolgt nur mit 270°.

Die Aufnahme eines Profiles erfolgt senkrecht zu den Achsen, solange das Fahrzeug sich in der Achse befindet.

Bei Messabständen unterhalb eines halben Meters ist diese Methode nicht mehr wirtschaftlich.

### 2.2. Welligkeitsuntersuchung

Die Projektleitung der BLS AlpTransit hat seit Jahren nach einer Methode zur Untersuchung der Welligkeit der Tunneloberflächen gesucht. Der vorgesehene Ansatz war jeweils die Untersuchung mit der Linealmethode, in dem man einen Lineal in den Hauptrichtungen über die Oberfläche streichen lässt und die maximalen Abstiche misst. Da keine andern Methoden bekannt waren, hat die Projektleitung in ihrer Ausschreibung Vorschläge zur sinnvollen Untersuchung der Welligkeit gefordert.

Weitere bekannte Methoden sind:
- Tastschrittverfahren
- Mittellinienverfahren
- Motifmethode: Mit dem neuen Standard ISO 12085 wird die MOTIF-Methode zur Bewertung der Oberfächenrauheit und -welligkeit empfohlen, welche auf langjährigen praktischen Erfahrungen der französischen Automobilindustrie basiert. Im Unterschied zum bisher weit verbreiteten Mittelliniensystem verwendet diese Norm als Bewertungsreferenz eine obere einhüllende Linie an das Primärprofil. Zur Beschreibung der Oberflächenrauheit und -welligkeit sind lediglich 2 horizontale und 5 vertikale Parameter definiert. Diese Parameter sind in Verbindung mit ihren Standardabweichungen so aussagekräftig, daß es möglich ist, alle wesentlichen Eigenschaften des Profils durch sie zu rekonstruieren. Die MOTIF-Methode beruht auf einer speziellen Art der Trennung der verschiedenen Komponenten des Oberflächenprofils, die es ermöglicht, die wesentlichen Irregularitäten des Primärprofils und der oberen einhüllenden Linie zu erkennen.

Diese Methoden erfüllen die Anforderungen der Untersuchungen grossflächiger Welligkeit nicht. Entweder untersuchen sie die Welligkeit nur in einzelnen Profilen oder sie beschreiben nur die Rauhigkeit einer Oberfläche, wobei nicht die zu korrigierenden Flächen berechnet und dargestellt werden.

### 2.3. Anforderungen

Die beiden ersten in Kapitel 2.1 aufgelisteten Systeme nehmen die Oberfläche mit einem schrägen Strahl auf, was sich auf die Genauigkeit negativ auswirkt.

Das System der LKO wird bei erhöhten Anforderungen (z.B. BLS AlpTransit mit 4 cm) nicht einsetzbar. Falls das Fahrzeug sich nicht in der Achse befindet, können Aufnahmelöcher entstehen.

Das System LKO wird unter Beachtung folgender Anforderungen weiterentwickelt:
- Laseraufnahme im rechten Winkel zu den Horizontal- und Vertikalachsen; unabhängig von der Position des Laserträgers.
- Die Aufnahme erfolgt mit 360°
- Aufnahmeauflösung ist nur in Abhängigkeit der Möglichkeiten des neuen Lasers.
- Wo keine Hindernisse vorhanden sind, vollautomatische Auswertung im Messrhythmus mit Vergleich zu den Vorgaben.
- Anzeichnen der zu korrigierenden Flächen
- Aufnahme der Oberfläche mit den angezeichneten Angaben mittels einer Panoramakamera, die durch die absolute Positionierung des Trägers mit dem Oberflächenmodell der Laseraufnahme vollautomatisch ein 3D Fotomodell bzw. eine Orthofoto erstellen kann.

### 3. Innovationen

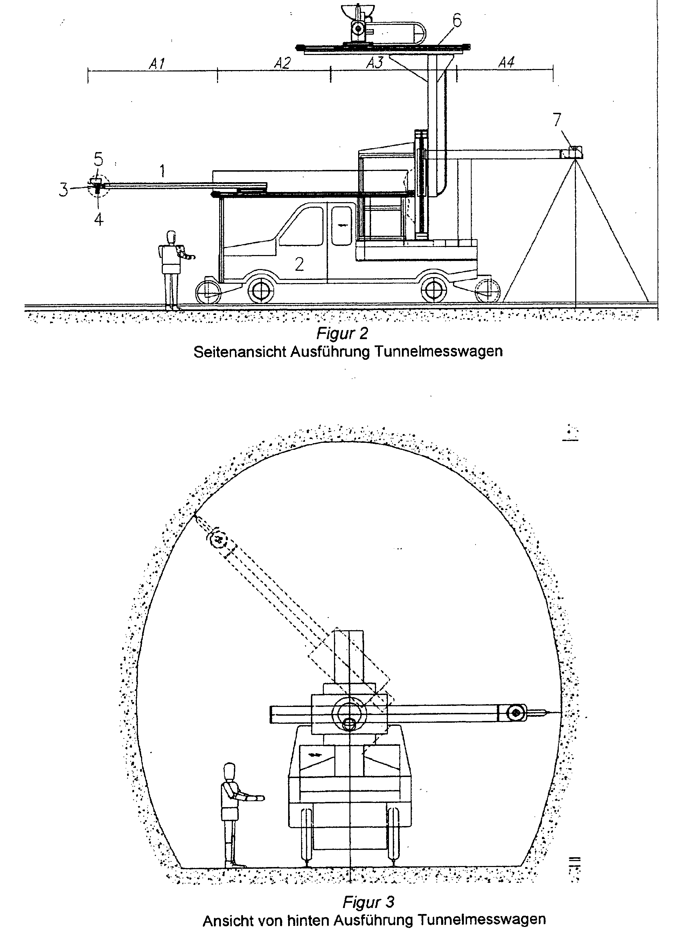

### 3.1. Aufnahme: Lasermessarm (Figur 2)

Es existieren heute Laser auf dem Markt, die 360° messen.

Um produktiv arbeiten zu können und den obgenannten Anforderungen vollumfänglich gerecht zu werden, wird für die Laseraufnahme ein neuer Messarm entwickelt:
- Auf dem Fahrzeug wird ein in der Fahrrichtung überragender Messarm montiert, auf dessen Spitze der Laser auf einer Plattform montiert wird.
- Durch die kontinuierliche Vorfahrt des Armes 1 bzw. des Lasers 4 kann die flächenhafte Aufnahme für jeweils 3 Meter im produktiven Railmode erfolgen.
- Durch das Anhalten des Armes ist auch die normale Profilmessung möglich.
- Da die Konstruktion aus einem das Fahrzeug überragenden Messarm 1 besteht, kann der an der Spitze montierte Laser 4 permanent 360° messen.
- Vor dem Messvorgang wird die Position des Fahrzeuges über das vorhandene Totalstationssystem (Theodolith) an zwei Punkten auf dem Messarm automatisch eingemessen und absolut positioniert. Ein Inklinometer misst die Quemeigung.
- Der Laser ist auf einer Plattform 3 montiert, die motorgesteuert horizontal und längswärts gedreht werden kann. Durch die zuvor ermittelte Position des Messarmes kann die Plattform 3 während der Aufnahme in den beiden Richtungen so bewegt werden, dass die Aufnahmen des Lasers 4 immer senkrecht zu den beiden Sollachsen erfolgen.

Mit dieser Lösung kann die Aufnahme mit zwei Messmethoden erfolgen, entweder fährt der Arm kontinuierlich vor (Railmode) oder er hält in den vorgegebenen Abständen und misst das entsprechende Profil.

Dieser Messarm, der in Figur 2 auf dem Messfahrzeug montiert, ist in der Kombination folgender dreier technischer Lösungen neu:
- Durch die Konstruktion eines Armes 1 kann der Laser bei Stillstand des Trägers 2 in kleinsten Schritten ohne Erschütterung durch den Träger in ruhiger Lage bewegt werden.
- Die Trägerposition wird durch zwei Messungen an beiden Armenden und der jeweils gemessenen Querneigung berechnet.
- Diese genaue Positionierung erlaubt wiederum, dass der Laser auf der Plattform 3, die an der Spitze des Armes vor- bzw rückwärts bewegt werden kann, so ausgerichtet wird, dass die Aufnahme immer senkrecht zu den Sollachsen erfolgt.

- **Neu:**: **Konstruktion eines Messarmes, der in einer Richtung beweglich ist und an dessen Spitze eine Plattform befestigt ist. Diese Plattform ist in Längsund Vertikalrichtung beweglich. Die Querneigung wird mit einem Inklinometer gemessen. An der Spitze der Plattform wird der Laser montiert, der das Profil mit 360° misst. Mit dem Laser ist auch ein Vermessungsreflektor montiert.**

### 3.2. Aufnahme: Panoramaphoto (Figur 2)

Neu ist, das die Aufnahme und Erstellung des Oberflächenmodelles mit einer hochwertigen Fotoaufnahme kombiniert werden kann und dies in einem Arbeitsgang auf dem gleichen Träger erfolgt. Entsprechende Systeme konnten trotz Recherche nicht gefunden werden.

Die Panoramakamera 7 wird am andern Ende des Trägers 2 (Figur 2) montiert, so dass beim Stillstand jeweils die Oberfläche um den Kamerastandort aufgenommen wird.

Der Standort des gemeinsamen Trägers des Laseraufnahmegerätes und der Panoramaphotokamera wird bestimmt. Die Aufnahme des Lasers ergibt eine digitales Oberflächenmodell, welches absolut definiert ist.

Es existieren Panoramaphotoapparate, die bei bekannter Aufnahmeposition die spätere Rekonstruktion des Aufnahmevektors zulassen.

Werden nun die Fotovektoren mit dem Oberflächenmodell geschnitten, so ist das Resultat ein 3D Fotomodell. Dieses kann anschliessend zu einer Othophoto der abgelegten Oberfläche weiterverarbeitet werden.
- **Neu:**: **Laser- und Fotoaufnahme auf dem gleichen Träger 2, dessen Position bestimmt ist. Die Kombination beider Aufnahmesysteme lässt eine vollautomatische Auswertung vor Ort zu einem 3D Fotomodell zu.**

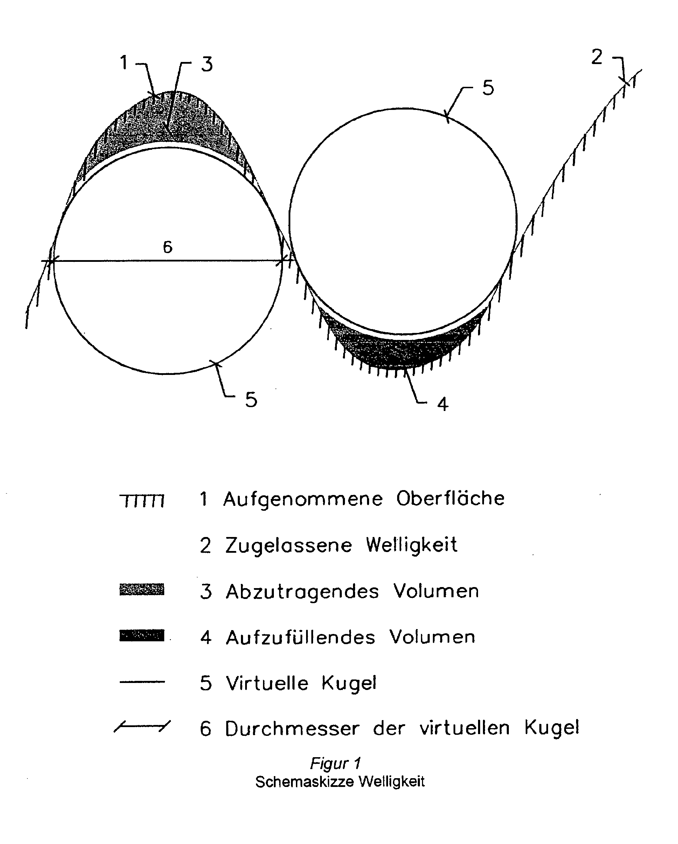

### 3.3. Auswertung: Welligkeit (Figur 1)

Um die Welligkeit der Oberfläche zu prüfen, haben wir die Kugelmethode entwickelt. Das Vorgehen ist schematisch in Figur 1 dargestellt. Das digitale Oberflächenmodell wird beidseitig mit einer Kugel 5 überstrichen. Alle Flächen, die die Kugeloberfläche nicht überstreicht d.h. nicht berührt, entsprechen nicht der durch den Radius definierten zugelassenen Welligkeit 2. Je nach der Seite der Überprüfung werden die Vertiefungen 4, die aufgefüllt werden müssen, oder die Erhebungen 3, die abzutragen sind, detektiert. Die Schemaskizze findet sich in Anhang 1. In der kurzen, für die Berechnung zur Verfügung stehenden Zeit, ist dies nur durch neuste Routinen der algorithmischen Geometrie möglich. (siehe Kapitel 4)
- **Neu:**: **Untersuchung der Raumoberfläche mit der Kugelmethode**

### 3.4. Auswertung: Spritzroboter (Figuren 2 und 3)

Neu ist ebenfalls, dass wir durch diese sofortige Auswertung mittels eines Spritzroboters 6 im Stande sind:
- Mittels einer Laseraufnahme das Oberflächenmodell zu erstellen und auszuwerten
- Die Korrekturen anzuzeichnen mittels eines auf dem gleichen Fahrzeug montierten Spritzroboters 6, als Beispiel in den Figuren 2 und 3 dargestellt.
- Und anschliessend mit einer Photo zu dokumentieren, die als 3D Modell oder als Orthophoto der abgelegten Oberfläche zur Verfügung steht.

- **Neu:**: **Neu ist die Kombination, dass nach der Aufnahme direkt die Korrektur angezeichnet und anschliessend photogrammetrisch dokumentiert wird.**

### 4. Anwendung (Figur 2)

Die Anwendung dieser Innovationen sind im beiliegenden technischen Bericht zur Offerte der ARGE ProWell für die Profilkontrolle und Welligkeitsauswertung des Lötschbergbasistunnels dargelegt.

Das Konzept hat den Bauherrn so überzeugt, dass er der ARGE ProWell gegen internationale Konkurrenz das Los 3 zugesprochen hat.

Die Überprüfung der Welligkeit wurde auf der Grundlage der Kugellösung mit dem Institut für theoretische Informatik der ETH Zürich diskutiert, welches bereit ist, vorhandene Routinen der algorithmischen Geometrie auf diese Aufgabenstellung anzupassen. Der entsprechende Beschrieb findet sich in der Beilage des Technischen Berichtes zur Offerte BLS AlpTransit.

## Patentansprüche

1. Verfahren zur Untersuchung digital erfasster Oberflächen auf ihre Welligkeit **gekennzeichnet dadurch, dass** man in der Simulation eine virtuelle Kugel (5) mit dem gewünschten Durchmesser(6), der sich nach den Anforderungen der Untersuchung richtet, die digital erfasste Oberfläche (1) ein- oder beidseitig ganzflächig überstreichen lässt und diejenigen Stellen festgehalten werden, die durch die Kugeloberfläche nicht berührt werden, so dass bei beidseitiger Untersuchung nicht nur die unzulässigen Vertiefungen (4), sondern auch die unzulässigen Erhebungen (3) detektiert werden.

2. **Anwendung des Verfahrens** nach Anspruch 1 zur Untersuchung von Tunneloder Rohroberflächen, in dem man die mit berührungslosen Methoden wie Photogrammetrie und Laseraufnahmen aufgenommenen Oberflächen mit der Methode des Anspruches 1 ein- oder beidseitig untersucht, so dass die Stellen detektiert werden, die den Anforderungen an die Welligkeit nicht genügen.
